# EUROPEAN PATENT APPLICATION

(11) **EP 1 927 950 A1**
(43) Date of publication of application: **04.06.2008**
(21) Application number: 07120961.3
(22) Date of filing: 19.11.2007
(51) Int. Cl.: G06T 1/60

(54) **Array of processing elements with local registers**

(30) Priority: 01.12.2006 EP 06301200
(71) Applicant: Thomson Licensing, 92100 Boulogne-Billancourt (FR)
(72) Inventor: Borsum, Malte, 30655, Hannover (DE); Gaedke, Klaus, 30659, Hannover (DE); Georgi, Marco, 30855, Langenhagen (DE)
(74) Representative: Rittner, Karsten

(57) **Abstract**

Specialized image processing circuitry is usually implemented in hardware in a massively parallel way as single instruction multiple data (SIMD) architectures. Known implementations suffer from the long and complicated connection paths between a processing element and the memory subsystem, and the resulting limitation of maximum operating frequency. An optimized architecture for image processing has processing elements (PE00,...,PE77) that are arranged in a two-dimensional structure, and each processing element has a local storage (X0,...,X8) containing a plurality of reference pixels that are not neighbors in the reference image. Instead, the reference pixels belong to different blocks of the reference image, which may vary for different encoding schemes.

## Description

### Field of the invention

This invention relates to an array of processing elements having local registers for input data.

### Background

Motion estimation (ME) is an example for a time critical application that requires very much processing power. Therefore, specialized circuitry is usually implemented in hardware in a massively parallel way as single instruction multiple data (SIMD) architectures. These architectures have commonly one processing element (PE) per value to be calculated, e.g. for comparing a pixel of a current picture to reference pixels. Usually, the corresponding pixel in the previous picture and its neighbors serve as reference pixel. In a more generalized view, any one-, two- or multi-dimensional data set serves as input to the processing. The PE for ME can access a current pixel and a number of reference pixels stored in a memory. The pixels are usually copied from a large image memory into a smaller operating memory that can be accessed faster. This copy operation takes relatively long, since the large image memory is slow. The operating memory contains a number of blocks that may, according to the employed encoding scheme, serve as reference for predicting the current block. Blocks have often a quadratic structure with 16x16, 8x8 or 4x4 pixels.

Usually the results of the PEs for a pixel block are accumulated for calculating a measure of similarity between the current block and a particular reference block, and subsequent circuitry determines the most similar reference block and, based on this block, encodes the current block.

Thus, a PE needs to have access to a number of reference pixels that are distributed all over the operating memory, which is relatively large compared to the current block. If redundant pixel storage shall be prevented, an architecture with a complicated connection circuitry is required. E.g. US2003/0174252 uses a programmable crossbar switch for distributing pixel values from a memory subsystem to the PEs. A bit mask controls which pixel data can be accessed by a PE. Crossbar switches commonly contain a high number of multiplexer elements in a deep hierarchy, which is disadvantageous for higher operating frequencies.

Usually, ME circuitry is implemented in hardware, e.g. an ASIC. However, known implementations generally suffer from the long and complicated connection paths between the PE and the memory subsystem, and the resulting limitation of maximum operating frequency. An optimized architecture is therefore desirable.

### Summary of the Invention

The present invention provides an architecture that optimizes the time critical signal paths between a PE and its respective memory subsystem. It has been realized that in prior art implementations these signal paths fulfill two different functions, namely the re-ordering of reference pixels (which is slow) and the connecting of the re-ordered reference pixels with the PEs (which needs to be fast). The optimization according to the invention is achieved in principle by largely separating these two functions.

One aspect of the invention is an array of a plurality of digital processing elements, wherein a digital processing element is a hardware structure for processing digital input data and providing digital output data and the array has one or more dimensions, and wherein each digital processing element has associated a plurality of registers for holding input data, wherein the input data can be (e.g. initially) loaded in a load mode from an external data source, and each of the plurality of registers of a digital processing element is connected through switchable connections to at least two registers being associated to the two neighboring processing elements in each dimension of the array, wherein the switchable connections can be switched into different shift-register modes of operation, and wherein registers associated to processing elements on the border of the array are connected to registers associated to processing elements on the opposite border of the array.

In one embodiment of the invention the shift-register mode comprises two or more sub-modes, wherein the sub-modes allow shifting into each direction of each dimension of said array. E.g. different sub-modes for "right" and "left" are possible for one dimension, and "north", "south", "east" and "west" are possible for at least two dimensions.

In one embodiment of the invention a first group of registers can be switched into the load mode while a second group of registers is in shift-register mode. In one embodiment of the invention a further mode being a 'short shift-register' mode comprises that registers that are associated to processing elements being not on the border of the array are connected to registers associated to processing elements on one of the borders of the array. Thus, the local registers of only some PEs of an array are arranged as a shift-register, while the others are not used and e.g. can be loaded. This is advantageous where loading takes more than one clock cycle.

In one embodiment of the invention said array is operated by a clock signal, and said processing by the PEs is performed in the same clock cycle as the shifting in the shift-register mode.

In one embodiment of the invention the input data are arranged in an order in one or more dimensions, and input data being stored in the plurality of registers associated to a particular processing element are not neighbors according to said order.

In one embodiment of the invention the input data are arranged in adjacent data blocks, and the plurality of registers associated to a processing element is for storing input data from different blocks (i.e.each of the registers stores data from a different block).

In the architecture according to one embodiment of the invention, several PEs are arranged in a two-dimensional structure, and each PE has a local storage. The local storage of each PE contains a plurality of reference values, e.g. pixels, which are not neighbors in the input data field, e.g. reference image. Instead, the reference pixels belong to different blocks of the reference image, which may vary for different encoding schemes. Depending on the defined search area, one of the reference pixels may correspond directly to the current pixel, i.e. it has the same coordinates in the reference image as the current pixel has in the current image. The other reference pixels may e.g. be from neighboring blocks or macroblocks in the reference image. They are used for larger block sizes than 8x8 pixels.

In a two-dimensional array structure, each PE is connected to its direct neighbors, such that pixel values can be shifted to and from any neighboring PE, which implements a two-dimensional shift register in this embodiment of the invention. This allows shifting a current block over multiple reference blocks.

Further, in one embodiment of the invention, the memory subsystem of each PE contains extension areas that serve as reference pixel load areas, i.e. storage areas for pixels that are not in the current run compared to the current pixel, but in the next run. This allows relatively slow loading of pixels from the main image memory, since writing to the extension areas and processing/shifting the main search area of the memory does not interfere. The main search area can be shifted separately in such mode. Due to this loading capability it is possible to extend the reference blocks in an arbitrary way, simultaneously to processing the other data.

Advantageous embodiments of the invention are disclosed in the dependent claims, the following description and the figures.

### Brief description of the drawings

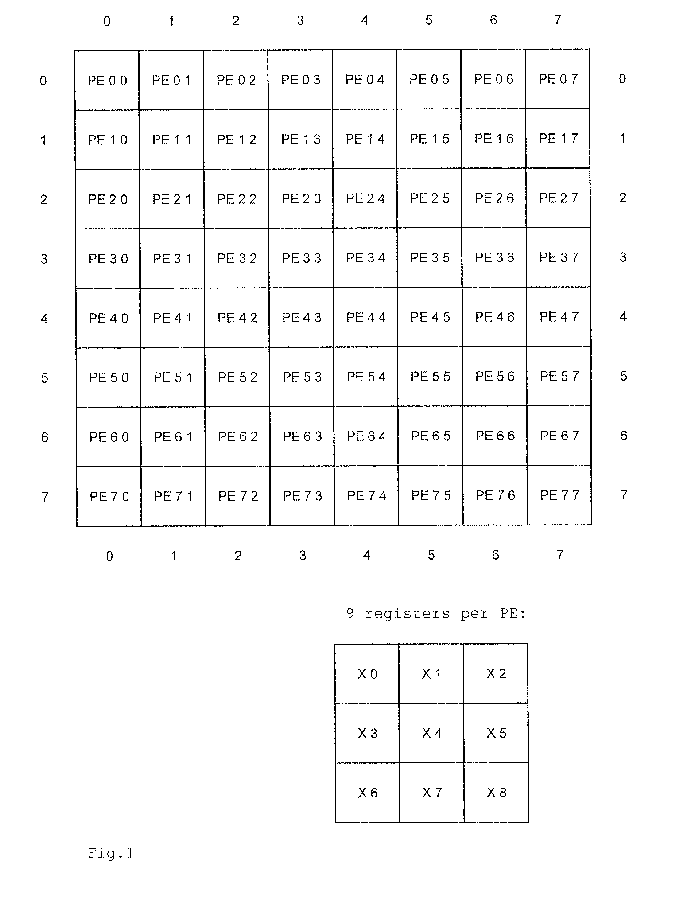

Exemplary embodiments of the invention are described with reference to the accompanying drawings, which show in
Fig.1 a) an 8x8 PE array;
Fig.1 b) the local memory of a PE;
Fig.2 the structure of the main search area, extension areas and assignment of the related pixels to PEs;
Fig.3 exemplary neighbors for border and non-border PEs;
Fig.4 the circuitry of a particular communication register; and
Fig.5 the structure of PEs, their communication registers and input data field areas.

### Detailed description of the invention

For motion estimation, a best match position for a given block in a previous field/frame is searched. To achieve this, a given block has to be compared to many positions in a search area. To achieve the necessary processing speed, a parallel hardware with one PE per pixel is used. This may be implemented as a two-dimensional array or grid of PEs, as shown in Fig.1. In this embodiment of the invention, each PE has nine special registers X₀,...,X₈, each of which holding a reference pixel value. E.g. one register X₀ holds the corresponding pixel of the corresponding block of the reference image, three registers X₁,X₃,X₄ hold corresponding pixels of neighboring blocks of the reference image that may be used for larger block sizes like 8x16,16x8,16x16, and five registers X₂,X₅,X₆,X₇,X₈ are used to buffer pixels that are shifted in or out the 16x16 block X₀-X₁-X₃-X₄ as described below. The neighboring reference blocks are e.g. those that are referred to as east X₁, south X₃ and south-east X₄. Further, one register R₀ holds a current pixel to be searched. Additionally, several further registers R₁-R₉ can be available for this purpose. All these registers are locally available in the PE. Thus, the connection structure between these registers and the processing unit within the PE is very simple. Moreover, each PE can have further registers R₁,R₂,R₃ that hold e.g. three further pixels of the current block, if the current block is larger than 8x8. This allows block matching e.g. on 8x16, 16x8 or 16x16 blocks.

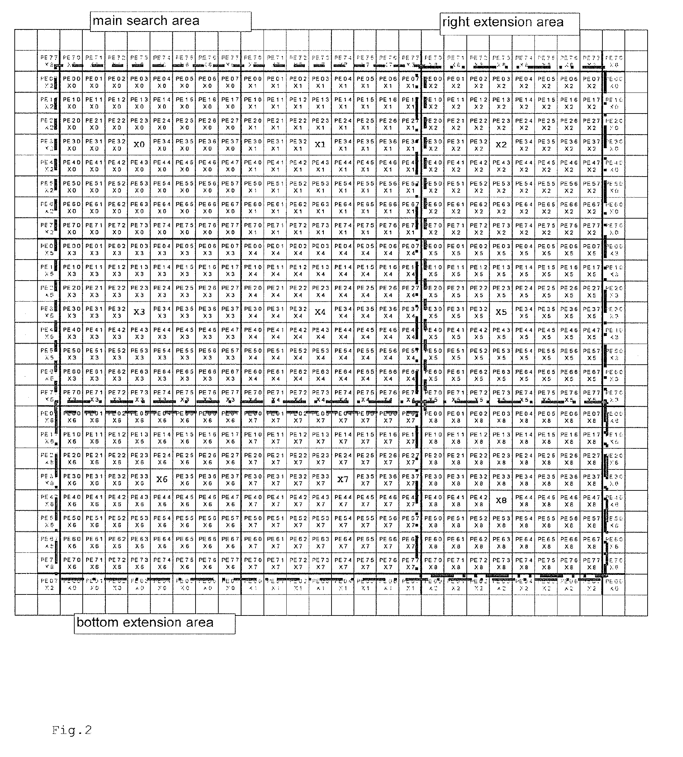

The described structure is better to understand when considering from where the single pixels come that each PE has locally stored. Fig.2. shows an area of 24x24 pixels of a reference image, and where each pixel is locally stored in the PE grid. The main search area of the reference image consists in this example of four 8x8 blocks. E.g. the upper left corner of each block of the main search area is locally stored in PE00, in the registers X₀, X₁, X₃ and X₄ . In the same manner, the other reference pixels are distributed to the other PEs.

During the motion estimation process, a measure of similarity between a current block and a reference block is determined, e.g. a sum-of-absolute-differences (SAD). If the current pixel of an 8x8 block for a particular PE is stored in a local register R₀, the PE calculates the absolute difference |R₀-X₀|, and a superior processor, e.g. an accumulator, calculates the SAD of all PEs as SAD = Σ|R₀-X₀| . In another example the current pixels of an 8x16 block are stored in the local registers R₀ and R₁. The PE calculates the absolute differences |R₀-X₀| and |R₁-X₁| in one or two steps, depending on the PE hardware, and an accumulator calculates SAD = Σ(|R₀-X₀|+|R₁-X₁|) . For this type of search, it is advantageous that the pixels of the neighboring reference block are locally available in the PE. Thus, the described grid of 8x8 PEs with each having four registers R₀,...,R₃ for current values is optimized for applications that process blocks of 8x8 data, but can also handle blocks of 8x16, 16x8 or 16x16 data, as is the case for currently used ME algorithms. For other applications, it may be advantageous to modify the number of PEs and/or the number of registers per PE.

For ME, the SAD is stored, the search area is moved and the SAD calculation is repeated. The block with the minimum SAD is determined, and finally selected as reference block for determining a motion vector. The moving of the search area is generally done by shifting the search area and the reference area relative to each other, which is usually a complex process but much easier with the architecture of the invention. According to one aspect of the invention, the larger search (or reference) area is shifted while the smaller current area is kept constant until all positions have been gone through. Thus, the current value in the R₀-R₃ registers remains the same for each PE, while the values in the "special" registers (X₀,...,X₈) are modified.

According to one aspect of the invention, these "special" registers (X₀,...,X₈) are connected to the corresponding "special" registers of the neighboring PE by a switchable connection that implements a 2-dimensional shift register allowing north, east, south or west shifting. Since the PEs may communicate their values to the neighboring PEs via these registers (X₀,...,X₈), they are called communication registers herein. The switchable connection typically uses multiplexers. The multiplexers are simple, e.g. 6:1, and are connected through short wires to a neighbor PE. Thus, high-frequency operation is possible. When the processing step(s) of a PE is done and the current block is to be moved to the next position in the search area, the pixels of each PE are simply shifted to its neighbor PE (in the currently used direction) by correspondingly controlling all multiplexers of the PE grid. Obviously it is very easy to change the search direction, namely by different multiplexer control. The neighbor mapping of border PEs is described below.

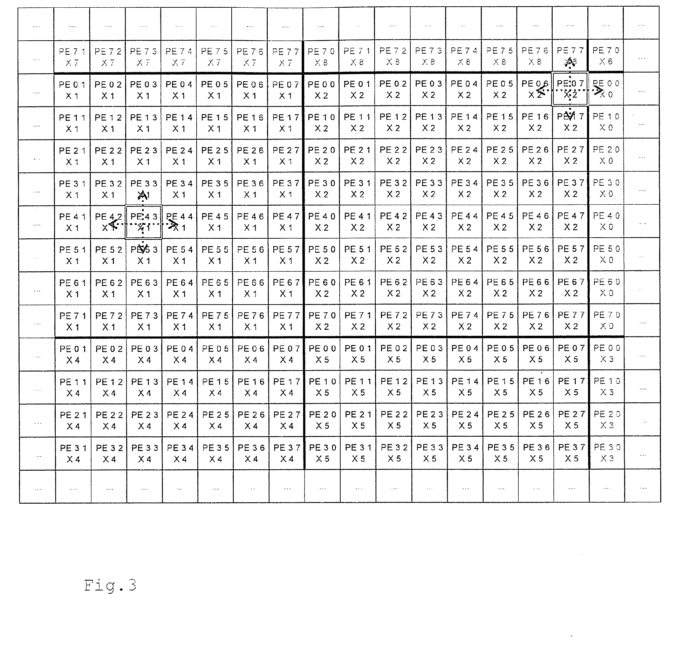

Thus, a shift register is obtained which provides an efficient way to exchange the search data between the PEs. It allows moving the search area pixel by pixel. E.g. a shift operation in "north" direction will shift the pixels of a particular PE, e.g. PE11, to the corresponding registers of its northern neighbor PE01. The pixels that are shifted out of the search area are input to the opposite side of the grid (though this is also known as "rotating", the term "shift" is used herein). E.g. in a "north" shift the pixels from PE01 are shifted to PE71. The same applies vice versa for "south" shifts, and further for "east" and "west" shifts. Therefore, the communication registers of all PEs make a 2-dimensional ring buffer. The structure is however complicated due to the 8x8 blocks: it is visible in Fig.2, which shows also the structures of possible ring buffers depending on shift direction. E.g. when configured for "east" (=right) shift over all blocks, one ring buffer holding the topmost line of pixels contains all X₀ registers of PE00-PE07, further all X₁ registers of the same PEs and then all X₂ registers of the same PEs. As shown in Fig.3, the last register PE07X₂ in the line is connected to the first one PE00X₀, which makes the ring structure. The other lines of the search area are arranged accordingly, and the same applies to the columns.

During one search, the search area is moved e.g. in a row or snake scan order over all possible positions within the 8x8 block. E.g. after seven shift operations in "south" direction the contents of PE00X₀, PE10X₀,..., PE70X₀ has been moved to PE70X₀,PE00X₃,...,PE60X₃ . Using snake scan order can mean that then an "east" shift follows, so that the contents of PE70X₀, PE00X₃,..., PE60X₃ is moved to PE71X₀, PE01X₃,...,PE61X₃ for calculating the next SAD, and then eight "north" shifts, another "east" shift etc. The first line/column requires only seven shifts since the first calculation may already be done while the data are loaded. Other types of snake scan may use other algorithms, e.g. (7xE)-S-(8xW)-S-(8xE)-S-... or (7xN)-W-(8xS)-W-(8xN)-W-... (where e.g. E is one "east" shift and PE calculation etc.) The currently unused part of the reference image is shifted into the extension registers X₂,X₅,X₆,X₇,X₈ and can be shifted back later. Other types of scan order can also be used, e.g. spiral scan starting from the middle block. Advantageously this is possible with the proposed structure since the registers of the PEs are coequal, so that e.g. an 8x8 source block to be searched within the search area can be stored in the R₀ registers, but also e.g. in the R₃ registers instead, depending on the employed search strategy. Similarly, the extension area can also be on the upper or left side, as may be required e.g. for spiral scan, since also the communication registers X₀-X₈ within a PE have coequal structures.

One particular advantage of this architecture is that the grid or array can be extended at the edges without limitation of the search area size, since only up to four of the communication registers are used as current search position. As indicated in Fig.2, these are the X₀,X₁,X₃ and X₄ registers of each PE. If processing e.g. a 16x16 block, each PE performs four calculations before the next shift, namely |R₀-X₀|, |R₁-X₁|, |R₂-X₂| and |R₃-X₃|. For these calculations it may need four cycles. Then the shifting is applied as described above, assuming that the corresponding extension area has been loaded before with valid data.

E.g. for "east" or "west" shifts the right extension area (communication registers X₂ and X₅) must have been loaded before, and for "north" or "south" shifts the bottom extension area (communication registers X₆ and X₇). After eight shifts, the communication registers of the respective extension area hold only data that were initially in the main search area. If snake scan order is used, these data will be shifted back. For an extension of the search area however the passed time (4x8 cycles) may have been used to load new extension area data from the main image memory. This is advantageous because it does not require access to the main image memory at a particular time, but can be done at any time during these 32 cycles. This allows seamless operation of the ME also when the main image memory is slow or very busy. The new data from the main image memory may be collected in an intermediate buffer, and copied into the communication registers of the extension area in a single step between the 8^{th} and the 9^{th} shift.

The architecture according to the invention is also advantageous for other types of processing, in particular image processing, such as e.g. 2-dimensional filtering. The number of PEs and/or the number of communication registers per PE may vary according to the actual application. In any case the PEs have local registers (communication registers) that can be connected dynamically into different types of shift registers that work as ring buffers, i.e. that don't lose data when shifting. Using this register structure it is possible to operate on a large input data field without the need to continuously access the source of this input data field. This is achieved by shifting the input data of a current operating step for re-usage in another or the same PE in the next operating step. Thus, in a way the input data are moved along the PEs rather than moving the PEs with their current intermediate result along the input data.

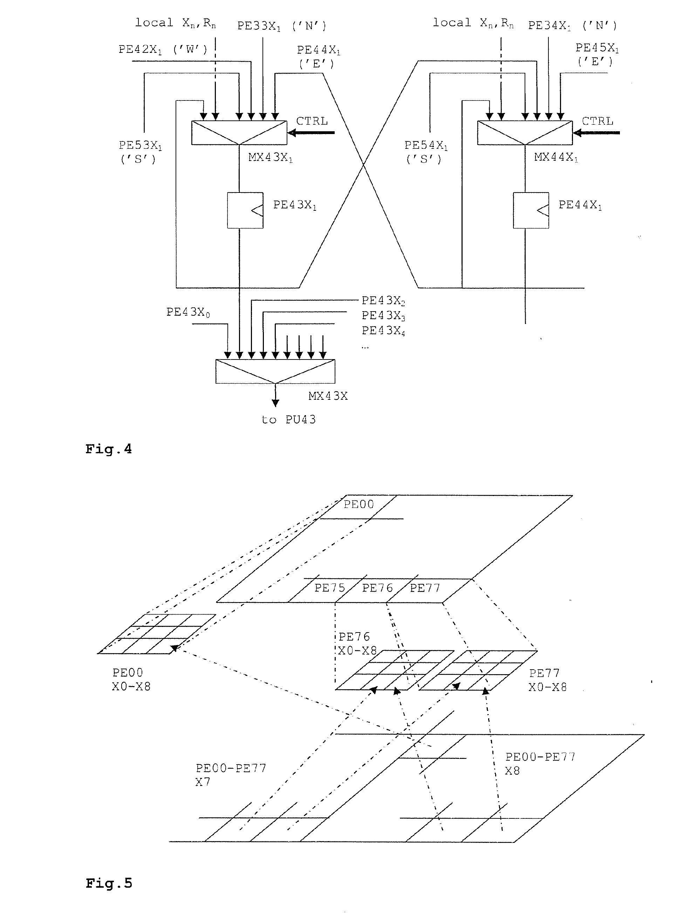

Fig.4 shows exemplarily and only in principle the circuitry of a particular communication register X₁ of PE43, which is also highlighted in Fig.3. This register PE43X₁ is via a multiplexer MX43X₁ connected to the local registers of PE43 and to its neighbors, namely PE53X₁ in southern direction, PE42X₁ in western direction, PE33X₁ in northern direction and PE44X₁ in eastern direction. Depending on the multiplexer position, as controlled by a control signal CTRL, the values are shifted in the respective direction. Further, one multiplexer position is required for holding the current value, i.e. when no shift is performed. The control signal CTRL is in one embodiment the same for all communication registers and PEs. In another embodiment it is possible to shift only parts of the 24x24 registers of Fig.2, so that different control signals are used for different parts of the PE array. E.g. for east or west shifting it may be not necessary to shift the bottom extension area, since it is not used. In 8x8 block mode it is sufficient to shift one line or one column of blocks. In this case, a 'short shift-register' mode is used in which registers that are associated to processing elements being not on the border of the array are connected to registers associated to processing elements on one of the borders of the array (this mode is not visible in Fig.4).

Fig.4 further shows that the actual processing unit PU43 of the PE can be connected to any of its local communication registers via a further multiplexer MX43X. This connection is switched depending on the current mode. E.g. if the source block is located in the upper left corner in 8x8 block mode then it is only X₀, and in 16x16 block mode it is X₀, X₁, X₃ and X₄. However, since all the registers X₀,...,X₈ are equivalent the source block can be located anywhere. Because only four communication registers per PE are needed to build a common 16x16 macroblock, there is one row or column that can be used to load new data from memory to extend the search area. Exemplarily, it takes 8 cycles to rotate one block but only 3 cycles to load a new row or column. Therefore the search area can be dynamically extended to unlimited size without requiring extra cycles.

As shown in Fig.4, each of the nine communication registers of a PE has only four connections outside the PE. All connections are local to the direct neighbor of the PE, and therefore short. The signal path comes from a register and has only a small multiplexer before it ends in the target register. Therefore the routing and timing closure for on-chip implementation is relatively easy.

Further, since the PEs are connected to their neighbors and the borders are wrapped-around, no extra cycles are needed at the borders. E.g. the "east" neighbor of PE07X₂ is PE00X₀, and its "northern" neighbor is PE77X₈.

Fig. 5 shows on top the PE array PE₀₀,...,PE₇₇ from Fig.1, in a second layer the communication registers of the PEs PE₀₀X₀-X₈,...,PE₇₇X₀-X₈ and in a third layer a part of the input data field, corresponding to the bottom right corner of Fig.2. Since the nine communication registers hold pixel data from different blocks, these pixels are not neighbors in the reference image but a kind of coarse representation of the current nine blocks. In principle, the architecture maps a multi-block data structure to a single block data structure, e.g. a 3x3 blocks reference area to a single block of PEs. Interconnections between communication registers are not shown in Fig.5.

In practical implementations, the processing can be performed in the same cycle as the shifting. Therefore, if processing can be performed in one cycle as described above for the 8x8 block mode, the data can continuously be shifted and simultaneously processed by the PEs.

The programming of the PE structure according to the invention requires simple but specialized commands, such as a command for selecting a shift mode or different commands for different shift modes, a command for loading data from an external (intermediate) memory into one of the extension areas etc.

The architecture according to the invention is also advantageous e.g. for 1-dimensional filtering. If input data are arranged in a row, e.g. a single line of pixels of image data, they may be organized in groups of n successive values. Instead of one register being associated with one PE, as usual, there are two or more registers connected to each PE. Each of these registers of a PE stores data from a different group of input data. The PE is connected via a multiplexer successively to each of its input registers and calculates a respective output value. Then the values are shifted to the neighboring PE. Different PEs may perform different operations, or the same type of operation on different data sets. A structure according to the invention provides e.g. a reduced data load time, short connections for the input data (which is advantageous for high-speed circuits) and flexibility since it can be switched or configured to handle different processing schemes.

The invention is advantageous for all kinds of processing structures that work on input data arrays, even two- or multi-dimensional input data fields, particularly if always the same type of calculation is performed.

## Claims

1. Array of a plurality of digital processing elements (PE00,...,PE77), wherein a digital processing element is a hardware structure for processing digital input data and providing digital output data and wherein the array may have one, two or more dimensions, wherein
- each digital processing element has associated a plurality of registers (X₀,...,X₈) for holding input data, wherein the input data can be loaded in a load mode from an external data source; and
- each of the plurality of registers (X₀,...,X₈) of a digital processing element is connected through switchable connections to at least two of the registers being associated to the two neighboring processing elements in each dimension of the array, wherein the switchable connections can be switched into a shift-register mode of operation, and wherein registers associated to processing elements on the border of the array are connected to registers associated to processing elements on the opposite border of the array.

2. Array according to claim 1, wherein said shift-register mode comprises two or more sub-modes, and wherein the sub-modes allow shifting into each direction of each dimension of said array.

3. Array according to claim 1 or 2, wherein a first group of registers can be switched into said load mode while a second group of registers is in said shift-register mode.

4. Array according to one of the claims 1-3, wherein in a further mode being a 'short shift-register' mode registers that are associated to processing elements being not on the border of the array are connected to registers associated to processing elements on one of the borders of the array.

5. Array according to one of the claims 1-4, wherein each processing element has at least one second register (R₀) for holding current data, wherein the contents of the second register is not shifted when the first registers are in said shift-register mode.

6. Array according to one of the claims 1-5, wherein said array is operated by a clock signal, and said processing by the processing elements is performed in the same clock cycle as the shifting in said shift-register mode.

7. Array according to one of the claims 1-6, wherein said array of processing elements has two dimensions with eight processing elements per dimension, and wherein each processing element has nine of said registers (X₀,...,X₈) for holding input data.

8. Array according to one of the claims 1-7, wherein the input data are arranged in an order in one or more dimensions, and input data being stored in the plurality of registers of a processing element are not neighbors according to said order.

9. Array according to claim 8, wherein the input data are arranged in adjacent data blocks, and the plurality of registers (X₀,...,X₈) associated to a processing element is for storing input data from different blocks.

10. Array according to one of the claims 1-9, wherein the digital input data and digital output data are multi-bit values.

11. Array according to claim 10, wherein said multi-bit values are pixel values of an image.
